# EUROPEAN PATENT APPLICATION

(11) **EP 1 757 445 A1**
(43) Date of publication of application: **28.02.2007**
(21) Application number: 05737163.5
(22) Date of filing: 26.04.2005
(51) Int. Cl.: B32B 27/34

(54) **POLYAMIDE RESIN LAMINATED FILM**

(30) Priority: 11.05.2004 JP 2004141372
(71) Applicant: Toyo Boseki Kabushiki Kaisha, Osaka-shi, Osaka 530-8230 (JP)
(72) Inventor: NISHI, Tadashi, Toyo Boseki K. K., Inuyama Factory, Inuyama-shi, Aichi 4848508 (JP); MIYAGUCHI, Y., Toyo Boseki K. K., Inuyama Factory, Inuyama-shi, Aichi 4848508 (JP)
(74) Representative: Weber, Thomas
(86) International application number: PCT/JP2005/007918
(87) International publication number: WO 2005/108071

(57) **Abstract**

[Problem] Provision of a polyamide resin laminate film preferable for packaging purposes and the like, which shows good slip property, superior handling workability even under a high humidity environment, and good transparency.

[Solving means] The polyamide resin laminate film of the present invention is produced by a co-extrusion method. In the film, a coating layer made of a polyamide resin containing inorganic fine particles having a fine pore volume of 0.3-1.0 ml/g in a proportion of 0.2-1.00 wt% is laminated on at least one surface of the substrate layer made of a polyamide resin, and the film is uniaxially or biaxially stretched. The film is adjusted to show a dynamical friction coefficient of not more than 0.7 at 80%RH, and a haze value of not more than 5.0.

## Description

### Technical Field

The present invention relates to a laminate film formed with a polyamide resin. More particularly, it relates to a polyamide resin laminate film with good slip property under high humidity and high transparency, which is preferable for packaging purposes and the like.

### Background Art

Since polyamide resin laminate film has good mechanical property, thermal property and high gas barrier property, it has been widely used for packaging purposes, particularly food packaging purposes. However, conventional polyamide resin laminate film is associated with a problem in that it becomes soft due to moisture absorption under a high humidity environment and shows degraded slip property. Particularly in a rainy season, therefore, problems caused by the lack of slip property sometimes occur during processing such as printing, vapor deposition, lamination, bag-making and the like. To prevent such problems, as a means for improving surface slip property, a method comprising forming protrusions on the surface by stretching a resin filled with fine particles of silica, kaolin and the like, a method comprising filling a resin with an organic lubricant such as a higher fatty acid bisamide compound and the like, and other methods have been proposed. As shown in patent reference 1, a method is known which comprises adding silica fine particles having a particular fine pore volume to inhibit occurrence of voids during stretching and form a concavo-convex surface, whereby good slip property under high humidity and high transparency are expressed. Moreover, patent reference 2 discloses a technique for expressing good slip property under high humidity by adjusting the shape of protrusion on the film surface and micro voids in the film surface layer.

patent reference 1: JP-A-9-143283
patent reference 2: JP-A-9-272748

### Disclosure of the Invention

### Problems to be Solved by the Invention

In the method comprising forming protrusions on the surface by stretching a resin filled with fine particles, however, since a large amount of fine particles needs to be added to achieve good slip property, the transparency becomes degraded by the addition and the use for packaging purposes is no longer available. In addition, the method comprising filling a resin with an organic lubricant is inconvenient in that the adhesion to other materials and surface wettability are degraded, though transparency is not degraded, and processing such as printing, vapor deposition, lamination and the like is difficult to apply. On the other hand, when a thick biaxially-oriented film is produced by the method disclosed in JP-A-9-143283, transparency is inevitably degraded, though a certain level of transparency and high slip property can be simultaneously expressed when a thin biaxially-oriented film is produced. According to the method disclosed in JP-A-9-272748, a polyamide film capable of expressing good slip property even under an atmosphere with rather high humidity can be obtained. However, a polyamide film obtained by such method cannot maintain good slip property under an atmosphere with extremely high humidity, for example, in a rainy season and the like.

It is therefore an object of the present invention to solve the above-mentioned problems associated with conventional polyamide resin laminate films, and provide a polyamide resin laminate film preferable for packaging purposes and the like, which shows good slip property, superior handling workability even under a high humidity environment such as a rainy season and the like, and good transparency.

### Means of Solving the Problems

Of the present invention, the constitution of the invention described in claim 1 is a polyamide resin laminate film produced by a co-extrusion method, comprising a substrate layer and a coating layer laminated on at least one surface of the substrate layer, which film shows a dynamical friction coefficient of not more than 0.7 as measured under an atmosphere of 80%RH, and a haze value of not more than 5.0.
The constitution of the invention described in claim 2 is the invention described in claim 1, wherein the coating layer is made of a polyamide resin containing inorganic fine particles having a fine pore volume of 0.3-1.0 ml/g in a proportion of 0.2-1.00 wt%.

The constitution of the invention described in claim 3 is the invention described in claim 1 or 2, wherein the proportion of the thickness of the coating layer to the thickness of the whole substrate layer is 0.01-0.4.

The constitution of the invention described in claim 4 is the invention described in any one of claims 1 to 3, wherein the inorganic particles are silica particles.

The constitution of the invention described in claim 5 is the invention described in any one of claims 1 to 4, wherein ethylene bis(stearic acid amide) is contained in a proportion of 0.05-0.30 wt%.

The constitution of the invention described in claim 5 or 6 is the invention described in any one of claims 1 to 5, wherein the coating layer contains second inorganic fine particles having a fine pore volume of 1.3-1.8 ml/g in a proportion of 0.3-0.5 wt%.

### Effect of the Invention

Since the polyamide resin laminate film of the present invention has good slip property even under high humidity conditions, it is superior in workability (processing performance) during various processing operations such as laminate processing, bag-making processing and the like. Moreover, since the film has good transparency, it can be preferably used for packaging purposes and the like. In addition, since the adhesiveness of the film surface is superior, processing such as printing using various kinds of ink, vapor deposition of metal and the like, lamination on other film and the like can be easily performed.

### Best Mode for Embodying the Invention

In the present invention, the polyamide resin that forms a substrate layer and a coating layer is a polymer having an amide group in a molecule chain. As such polyamide resin, polyamide resins such as nylon 6, nylon 7, nylon 11, nylon 12, nylon 66, nylon 6T, nylon MXD6, nylon 46 and the like, and copolymers, resin mixtures, polymer alloys and the like of the polyamide resins can be used, with preference given to nylon 6 since production of film is easy. Nylon 6 can be produced easily by ring-opening polymerization of ε-caprolactam.

The polyamide resin to be used in the present invention preferably has an oligomer content of not more than 1 wt%. When the oligomer content exceeds 1 wt%, the oligomer unpreferably adheres to a metal roll with ease when a molten polyamide resin is wound around the roll. In addition, the polyamide resin to be used in the present invention preferably has a moisture content of not more than 0.1 wt%. When the water content exceeds 0.1 wt%, the film may be unpreferably broken during biaxial orientation due to hydrolysis during melting. When nylon 6 is used as a polyamide resin, the relative viscosity of nylon 6 is preferably not less than 2.5 and not more than 4.0. When the relative viscosity is less than 2.5, the film after biaxial orientation unpreferably shows low impact strength, and conversely, when the relative viscosity exceeds 4.0, an unstretched film unpreferably resists biaxial orientation.

The polyamide resin laminate film of the present invention needs to be produced by what is called a co-extrusion method. To be specific, for production of an unstretched film, a method wherein a polyamide resin is charged in 2 or 3 extruders, the resin is laminated using a 2 or 3 layer multi manifold or a feed block, and extruded from a die to give a molten sheet, which is cooled and solidified on a cooling roll. When an unstretched film is to be obtained by such method, an electrostatic adhesion method or a liquid coating adhesion method is preferably used to enhance adhesion between a sheet and a rotary cooling drum so as to improve sheet planarity.

In the present invention, moreover, it is necessary to add inorganic fine particles having a given fine pore volume to a coating layer made of a polyamide resin.
While the kind of the inorganic particles is not particularly limited as long as they are fine particles inactive with a polyamide resin, such as particles of metal oxide such as silica, titanium dioxide, talc, kaolinite and the like, metal salt such as calcium carbonate, calcium phosphate, barium sulfate and the like, an organic polymer and the like. In view of the easiness of adjusting the fine pore volume, they are preferably porous silica fine particles. As a method for forming silica fine particles, a method including pulverizing and classifying synthetic silica is generally employed. It is also possible to employ a method including directly forming spherical fine particles during synthesis.

The inorganic fine particles need to have a fine pore volume of 0.3-1.0 ml/g, preferably within the range of 0.5-0.8 ml/g. The fine pore volume in the present invention is a volume (ml/g) of fine pore contained in 1 g of the inorganic fine particles. When the fine pore volume is less than 0.3 ml/g, many voids occur when a polyamide resin containing the particles is formed into a film and then uniaxially or biaxially stretched, thus unpreferably impairing the transparency of the film. Conversely, when the fine pore volume exceeds 1.0 ml/g, a concavo-convex surface is difficult to form when an unstretched film is stretched, thus unpreferably preventing sufficient slip property. The silica fine particles are agglomerates resulting from the coagulation of primary particles, in which fine pores have been formed in the interspace between primary particles and primary particles. Silica fine particles having different fine pore volumes can be obtained by changing the synthesis conditions.

The content of inorganic fine particles in the coating layer needs to be not less than 0.2 wt% and less than 1.0 wt%, preferably 0.3-0.6 wt%. When the content is less than 0.2 wt%, the surface roughness becomes insufficient and, unpreferably, good slip property under high humidity conditions cannot be afforded. Conversely, when the content exceeds 1.0 wt%, the transparency of the film becomes unpreferably poor.

When silica fine particles are used as the inorganic fine particles, they can be preferably added to a polyamide resin by a method including addition thereof during a polymerization step of the polyamide resin. When such addition method is employed, silica fine particles can be uniformly dispersed in the polyamide resin with extreme ease, which in turn enables prevention of the defects such as fish-eye and the like developed in the stretched film. When a method including addition of silica fine particles during a polymerization reaction step of a polyamide resin is employed, since about 5-20 wt% of the silica fine particles flows out during removal of monomers and oligomers, silica fine particles should be added in consideration of the amount to be washed out.

Silica fine particles preferably have an average particle size of 1.5-1.9 µm, more preferably within the range of 1.6-1.8 µm. When the average particle size is less than 1.5 µm, a concavo-convex surface is difficult to form during stretching and, unpreferably, sufficient slip property cannot be afforded. Conversely, when the average particle size exceeds 1.9 µm, the surface roughness of the film becomes too high, thus unpreferably degrading the appearance.

In the meantime, as the layer structure of the polyamide resin laminate film of the present invention, a two-layer structure in which a coating layer is laminated on one surface of a substrate layer, a three-layer structure in which a coating layer is laminated on both sides of a substrate layer and the like can be employed. While the thickness of the polyamide resin laminate film of the present invention can be freely set according to specific use, it is generally 10-200 µm, preferably 25-120 µm. The proportion of the thickness of the coating layer to the thickness of the substrate layer is preferably not less than 0.01 and less than 0.4, more preferably not less than 0.1 and less than 0.25. When the proportion of the thickness of the coating layer to the thickness of the substrate layer is less than 0.05, sufficient slip property cannot be expressed which is unpreferable. Conversely, when the proportion of the thickness of the coating layer to the thickness of the substrate layer exceeds 0.4, transparency of the film is degraded, which is also unpreferable. In addition, when the thickness of the coating layer of an unstretched film exceeds 25.0 µm, a concavo-convex surface is difficult to form during stretching of the film, which in turn unpreferably prevents expression of sufficient slip property.

The polyamide resin laminate film of the present invention is produced by melt extrusion of a mixture containing a polyamide resin and inorganic fine particles to give an unstretched film, which is then uniaxially or biaxially stretched. To be precise, a longitudinal·transverse stretching method in which an unstretched sheet melt-extruded from a T-die is stretched with a roll type stretching machine in the longitudinal direction, stretched in the transverse direction with a tenter type stretching machine and subjected to a heat set treatment and a relaxation treatment, and the like can be preferably employed. When a stretched film is produced by such longitudinal-transverse stretching method, a preferable cast temperature is 240-290°C during melt extrusion and longitudinal stretching conditions are 40-60°C, 2.8- to 4.0-fold, transverse stretching conditions are 60-170°C, 3.5-to 4.5-fold, and the conditions of heat set treatment and relaxation treatment to be applied after stretching are 180-220°C, within the range of 3-15%. Depending on the use, stretching in the longitudinal direction ·transverse direction may be applied as appropriate, besides the above-mentioned longitudinal-transverse stretching.

As a method for producing the polyamide resin laminate film of the present invention, what is called a longitudinal-longitudinal-transverse stretching method can also be employed. The longitudinal-longitudinal-transverse stretching method includes, for longitudinal stretching of a substantially unstretched polyamide sheet, a first stage stretching, a sequential second stage stretching without cooling to not more than Tg, after which transversal stretching at a ratio of not less than 3-fold, preferably not less than 3.5-fold, and then heat setting. When the longitudinal-longitudinal-transverse stretching method is employed, heat roll stretching, infrared radiation stretching and the like can be employed as a longitudinal stretching method. When the polyamide resin laminate film of the present invention is produced by the above-mentioned longitudinal-longitudinal-transverse stretching method, a biaxially-stretched polyamide film showing a small difference in the property in the width direction can be obtained. When the polyamide resin laminate film of the present invention is produced by the above-mentioned longitudinal-longitudinal-transverse stretching method, a stretch stress during longitudinal stretching becomes small, and development of voids around the inorganic fine particles (silica fine particles etc.) added to a polyamide resin can be prevented during stretching, whereby haze can be reduced.

Moreover, when a polyamide resin laminate film is produced by the above-mentioned longitudinal-longitudinal-transverse stretching method, the film is preferably stretched about 1.3- to 1.7-fold at a temperature of 65-75°C by the longitudinal stretching in the first stage. When the draw ratio in the first stage is small and outside the above-mentioned range, the distortion by boiling the film (i.e., boil distortion) becomes high and the film unpreferably becomes impractical. Conversely, when the draw ratio in the first stage is high and outside the above-mentioned range, the thickness patch in the longitudinal direction unpreferably increases. Furthermore, when a polyamide resin laminate film is produced by the longitudinal-longitudinal-transverse stretching method, the film is preferably stretched about 1.8-to 2.4-fold at a temperature of 80-90°C by the second stage longitudinal stretching. When the draw ratio in the second stage is small and outside the above-mentioned range, the boil distortion becomes high and the film unpreferably becomes impractical. Conversely, when the draw ratio in the second stage is high and outside the above-mentioned range, the strength (strength at 5% elongation etc.) in the longitudinal direction becomes low and practically unpreferable.
By performing such two-stage orientation, the stress during stretching can be suppressed and the development of voids due to the added inorganic fine particles can be prevented. It is also preferable to set the longitudinal draw ratios of the first and the second stages such that the ratio of the longitudinal draw ratio of the first stage to that of the second stage falls within the range of 0.6-0.9.

When a polyamide resin laminate film is produced by the longitudinal-longitudinal-transverse stretching method, the film is preferably stretched about 4.0- to 5.5-fold at a temperature of 120-140°C by the transverse stretching. When the draw ratio of the transverse stretching is small and outside the above-mentioned range, the strength (strength at 5% elongation etc.) in the width direction becomes low and practically unpreferable. Conversely, when the draw ratio of the transverse stretching is high and outside the above-mentioned range, the thermal shrinkage in the width direction becomes unpreferably high. On the other hand, when the temperature of the transverse stretching is low and outside the above-mentioned range, the boil distortion becomes large and practically unpreferable. Conversely, when the temperature of the transverse stretching is high and outside the above-mentioned range, the strength (strength at 5% elongation etc.) in the width direction becomes low and practically unpreferable.

Furthermore, when a polyamide resin laminate film is produced by the longitudinal-longitudinal-transverse stretching method, a heat setting treatment is preferably conducted at a temperature of 180-230°C. When the temperature for the heat setting treatment is low and outside the above-mentioned range, the thermal shrinkage in the longitudinal direction and the width direction becomes unpreferably high. Conversely, when the temperature of the heat setting treatment is high and outside the above-mentioned range, the impact strength of the biaxially-oriented film becomes unpreferably low.

In addition, when a polyamide resin laminate film is produced by the longitudinal-longitudinal-transverse stretching method, a relaxation treatment preferably affords relaxation by 5-10%. When the rate of the relaxation treatment is low and outside the above-mentioned range, the thermal shrinkage in the longitudinal direction and the width direction becomes unpreferably high. Conversely, when the rate of the relaxation treatment is high and outside the above-mentioned range, the strength (strength at 5% elongation etc.) in the longitudinal direction and the width direction becomes low and practically unpreferable.

The polyamide resin laminate film of the present invention can contain various additives such as lubricant, antiblocking agent, heat stabilizer, antioxidant, antistatic agent, light stabilizer, impact resistance improver and the like within the range where the properties are not impaired. Particularly, when an organic lubricant having an effect of lowering the surface energy, such as ethylenebisstearic acid and the like, is added, the slip property of the film becomes more superior, which is preferable. When the amount of the organic lubricant to be added is lower than 0.05, it does not contribute to the improvement of the slip property. Conversely, when the amount of the organic lubricant exceeds 0.30 wt%, the film unpreferably shows degraded transparency and low adhesiveness of the film surface.

Moreover, the polyamide resin laminate film of the present invention can be subjected to a heat treatment or a humidity conditioning treatment so as to improve size stability depending on the use. To improve the adhesiveness of the film surface, a corona treatment, a coating treatment, a flame treatment and the like may be applied, and processing such as printing, vapor deposition, lamination and the like may also be applied.

In addition, the polyamide resin laminate film of the present invention, which is obtained by the above-mentioned embodiment, needs to show a dynamic friction coefficient of not more than 0.7, more preferably not more than 0.4, under 80%RH atmosphere. When the dynamic friction coefficient exceeds 0.7, the processability during bag-making processing and the like unpreferably becomes low. A dynamic friction coefficient under 80%RH atmosphere of lower than 0.3 is not preferable, since weaving easily occurs during winding the film around a roll.

The polyamide resin laminate film of the present invention needs to have a haze value of not more than 5.0, more preferably not more than 3.0. When the haze value exceeds 5.0, transparency is degraded, and the film is no longer appropriate for food packaging.

### Examples

The polyamide resin laminate film of the present invention is explained in detail in the following by referring to Examples, which are not to be construed as limitative.

### [Example 1]

### ·Production of resin forming coating layer

Using a batch-wise polymerization furnace, nylon 6 chips (hereinafter to be referred to as a coating resin) were obtained by ring-opening polymerization of ε-caprolactam. During polymerization, a given amount of silica fine particles (SY530 manufactured by Fuji Silysia Chemical Ltd) having a fine pore volume of 0.8 ml/g and an average particle size of 1.9 µm was added to an aqueous solution of ε-caprolactam, and dispersed in a high speed stirrer to disperse the silica fine particles in nylon 6. The obtained nylon 6 chips were extracted with hot water in a batch-wise extraction furnace to reduce the content of monomer and oligomer in nylon 6 chips to not more than 1 wt%, and dried to achieve the moisture content of not more than 0.1 wt%. The relative viscosity of the obtained nylon 6 chips was about 3.0 as measured at 20°C (using 96% conc. sulfuric acid solution).The fine pore volume and average particle size of the silica fine particles to be added during polymerization were each measured by the following methods.

### [fine pore volume]

Using a high speed specific surface area/fine pore distribution measurement apparatus (ASAP2400, manufactured by Shimadzu Corporation) and by a BJH method utilizing the nitrogen adsorption·desorption, the fine pore volumes within a given range of fine pore size (17-3000Å) were added up (detail is shown in SHIMADZU REVIEW, vol. 48, No. 1, pp. 35-49).

### [average particle size of silica fine particles]

Silica fine particles were dispersed in ion exchange water stirred at a given rpm (about 5000 rpm) using a high speed stirrer, the dispersion was added to ISOTON (saline), further dispersed in an ultrasonication dispersing machine, the particle size distribution was determined by a Coulter counter method, and the particle size at 50% of the weight cumulative distribution was calculated as an average particle size.

### ·Production of resin forming substrate layer

In the same manner as in the production of resin forming coating layer, using a batch-wise polymerization furnace and by ring opening polymerization of ε-caprolactam, nylon 6 chips were obtained (hereinafter to be referred to as a substrate resin). In polymerization of nylon 6, inorganic particles etc. were not added. In the same manner as in the production of resin forming coating layer, the obtained nylon 6 chips were extracted and dried. The relative viscosity of the obtained nylon 6 chips was about 3.0 as measured at 20°C.

The coating resin containing N,N'-ethylenebis(stearyl amide) (hereinafter to be referred to as EBS) by 0.15 wt% was melted in an extruder, and supplied to a T-die. A substrate resin containing EBS by 0.15 wt% was melted in a different extruder, and supplied to a T-die. The coating resin and the substrate resin were delivered in lamination to form a sheet, which was wound around a temperature-modulated metal drum at 40°C, cooled and taken up to give an about 200 µm-thick laminate film (unstretched film) having a two-layer structure consisting of a coating layer and a substrate layer (contact side with metal drum). In the polymerization of the above-mentioned coating resin, the content of the silica fine particles in the coating resin layer was adjusted to about 0.30 wt%. The content of the silica fine particles in the coating resin layer and the substrate resin layer was measured by a fluorescence X-ray analysis method. In the production of the laminate film, the thickness of the coating layer was adjusted to about 0.071-fold of the thickness of the substrate layer. The Tg of the obtained film was 40°C and Tc was 68°C.

Thereafter, the obtained unstretched film was subjected to the first longitudinal stretching (about 1.6-fold) at a stretching temperature of about 70°C, then second longitudinal stretching (stretching temperature about 80°C, about 2.0-fold) while maintaining at 70°C. The sheet was continuously led to a stenter, transversely stretched 4-fold at about 130°C, heat set at about 210°C and transversely relaxed by 5% and cooled. The both ends were cut off to give a biaxially-oriented polyamide film of Example 1. In the obtained biaxially-oriented polyamide film, the thickness of the coating layer was about 1.0 µm, the thickness of the substrate layer was about 14.0 µm (thus, in the biaxially-oriented polyamide film, the thickness of the coating layer was about 0.071-fold of the thickness of the substrate layer).

Using the obtained biaxially-oriented polyamide film of Example 1, the properties such as dynamic friction coefficient, haze (transparency) and the like under high humidity were evaluated. Using the obtained biaxially-oriented polyamide film, moreover, a bag making process was performed and the workability (processing performance) then was evaluated. The evaluation results are shown in Table 1. The evaluation results are based on the following measurement methods.

### [dynamic friction coefficient at 80%RH]

The dynamic friction coefficient at 20°C, 80%RH was measured according to ASTM-D1894. When the dynamic friction coefficient was not more than 1.2, the slip property under high humidity is considered to be good and the processing performance is considered to be superior.

### [haze value]

The haze value of the film was measured according to JIS-K6714 and using a haze meter manufactured by Nippon Denshoku Industries Co., Ltd. When the haze value is not more than 5.0, the film is considered to have transparency necessary for a packaging film.

### [Examples 2-4]

In the same manner as in Example 1 except that, in the production of the coating resin, the fine pore volume of the silica fine particles to be added to ε-caprolactam during polymerization was changed as shown in Table 1, the biaxially-oriented polyamide films of Examples 2-4 were obtained. The properties of the obtained biaxially-oriented polyamide films of Examples 2-4 were evaluated in the same manner as in Example 1. The evaluation results are shown in Table 1.

### [Example 5]

In the same manner as in Example 1 and using a batch-wise polymerization furnace, a coating resin made of nylon 6 was obtained by ring-opening polymerization of ε-caprolactam. For polymerization of the coating resin, a given amount each of silica fine particles (SY350 manufactured by Fuji Silysia Chemical Ltd) having a fine pore volume of 1.6 ml/g and an average particle size of 1.9 µm and silica fine particles (SY530 manufactured by Fuji Silysia Chemical Ltd) having a fine pore volume of 0.8 ml/g and an average particle size of 1.9 µm was added to an aqueous solution of ε-caprolactam, and dispersed in a high speed stirrer to disperse two kinds of the silica fine particles having different fine pore volumes in nylon 6. In the polymerization of the coating resin, the content of the silica fine particles having a fine pore volume of 1.6 ml/g was adjusted to about 0.41 wt% and the content of the silica fine particles having a fine pore volume of 0.8 ml/g was adjusted to about 0.30 wt%. In the same manner as in Example 1 and using a batch-wise polymerization furnace, a substrate resin made of nylon 6 was obtained by ring-opening polymerization of ε-caprolactam. For polymerization of the substrate resin, a given amount of silica fine particles having a fine pore volume of 1.6 ml/g and an average particle size of 1.9 µm was added to an aqueous solution of ε-caprolactam, and dispersed in a high speed stirrer to disperse the silica fine particles in nylon 6. In the polymerization of the substrate resin, the content of the silica fine particles in the substrate resin layer was adjusted to about 0.41 wt%. Using the obtained coating resin and substrate resin and in the same manner as in Example 1, the biaxially-oriented polyamide film of Example 5 was obtained. The properties of the obtained biaxially-oriented polyamide films of Example 5 were evaluated in the same manner as in Example 1. The evaluation results are shown in Table 1.

### [Example 6]

In the same manner as in Example 1 except that, in the polymerization of coating resin, the content of silica fine particles having a fine pore volume of 0.8 ml/g was adjusted to about 0.15 wt% and, in the polymerization of substrate resin, the content of silica fine particles in the substrate resin layer was adjusted to about 0.42 wt%, the biaxially-oriented polyamide film of Example 6 was obtained. The properties of the obtained biaxially-oriented polyamide film of Example 6 were evaluated in the same manner as in Example 1. The evaluation results are shown in Table 1.

### [Example 7]

In the same manner as in Example 1 except that the ratio of the thickness of the coating layer to that of the substrate layer of the biaxially-oriented film was adjusted as shown in Table 1, an unstretched film was obtained. Thereafter, the obtained unstretched film was subjected to a longitudinal stretching (about 3.15-fold) at a stretching temperature of about 75°C, then the sheet was continuously led to a stenter, transversely stretched 4-fold at about 130°C, heat set at about 210°C and transversely relaxed by 5% and cooled. The both ends were cut off to give a biaxially-oriented polyamide film of Example 7. The properties of the obtained biaxially-oriented polyamide film of Example 7 were evaluated in the same manner as in Example 1. The evaluation results are shown in Table 1.

### [Examples 7, 8]

In the same manner as in Example 1 except that the content of the silica fine particles in the coating resin layer was adjusted as shown in Table 1, the biaxially-oriented polyamide films of Examples 7, 8 were obtained. The properties of the obtained biaxially-oriented polyamide film of Examples 7, 8 were evaluated in the same manner as in Example 1. The evaluation results are shown in Table 1.

### [Comparative Examples 1, 2]

In the same manner as in Example 1 except that, in the production of coating resin, the fine pore volume of the silica fine particles to be added to ε-caprolactam during polymerization was adjusted as shown in Table 1, the unstretched films of Comparative Examples 1, 2 were obtained. Thereafter, each of the obtained unstretched films was subjected to a longitudinal stretching (about 3.15-fold) at a stretching temperature of about 75°C, then the sheet was continuously led to a stenter, transversely stretched 4-fold at about 130°C, heat set at about 210°C and transversely relaxed by 5% and cooled. The both ends were cut off to give biaxially-oriented polyamide films of Comparative Examples 1, 2. The properties of the obtained biaxially-oriented polyamide films of Comparative Examples 1, 2 were evaluated in the same manner as in Example 1. The evaluation results are shown in Table 1.

### [Comparative Examples 3, 4]

In the same manner as in Example 1 except that the content of the silica fine particles in the coating resin layer was adjusted as shown in Table 1, and the method of biaxial orientation of the unstretched film was changed to the longitudinal-transverse stretching method as in Comparative Examples 1, 2, the biaxially-oriented polyamide films of Comparative Examples 3, 4 were obtained. The properties of the obtained biaxially-oriented polyamide films of Comparative Examples 3, 4 were evaluated in the same manner as in Example 1. The evaluation results are shown in Table 1.

### [Comparative Example 5]

In the same manner as in Example 1 except that the ratio of the thickness of the coating layer to that of the substrate layer of the biaxially-oriented film was adjusted as shown in Table 1, and the method of biaxial orientation of the unstretched film was changed to the longitudinal-transverse stretching method as in Comparative Examples 1, 2, the biaxially-oriented polyamide film of Comparative Example 5 was obtained. The properties of the obtained biaxially-oriented polyamide film of Comparative Example 5 were evaluated in the same manner as in Example 1. The evaluation results are shown in Table 1.

**Table 1**

| | film production conditions properties of film | | | | | | | | |
|---|---|---|---|---|---|---|---|---|---|
| | coating layer | | substrate layer | | ratio of coating layer | haze (%) | dynamic friction coefficient (80%RH) | processing performance | note |
| | fine pore volume (mg/l) | silica content (wt%) | fine pore volume (mg/l) | silica content (wt%) | | | | | |
| Ex. 1 | 0.8 | 0.30 | - | - | 0.071 | 2.6 | 0.5 | good | |
| Ex. 2 | 0.5 | 0.30 | - | - | 0.071 | 4.0 | 0.3 | good | |
| Ex. 3 | 0.4 | 0.30 | - | - | 0.071 | 5.0 | 0.3 | good | |
| Ex. 4 | 1.0 | 0.30 | - | - | 0.071 | 2.0 | 0.5 | good | |
| Ex. 5 | 0.8 | 0.30 | 1.6 | 0.41 | 0.071 | 3.6 | 0.3 | good | |
| Ex. 6 | 0.8 | 0.15 | 1.6 | 0.42 | 0.071 | 2.7 | 0.4 | good | |
| Ex. 7 | 0.8 | 0.30 | - | - | 0.030 | 2.4 | 0.5 | good | |
| Ex. 8 | 0.8 | 0.20 | - | - | 0.071 | 1.8 | 0.6 | good | |
| Ex. 9 | 0.8 | 0.50 | - | - | 0.071 | 5.0 | 0.3 | good | |
| Com. Ex. 1 | 0.2 | 0.45 | - | - | 0.071 | 7.0 | 0.5 | good | poor transparency |
| Com. Ex. 2 | 1.5 | 0.45 | - | - | 0.071 | 1.2 | 1.1 | bad | |
| Com. Ex. 3 | 0.8 | 0.10 | - | - | 0.071 | 1.6 | 1.0 | bad | |
| Com. Ex. 4 | 0.8 | 1.50 | - | - | 0.071 | 10.0 | 0.3 | good | poor transparency |
| Com. Ex. 5 | 0.8 | 0.45 | - | - | 0.500 | 10.0 | 0.4 | good | poor transparency |

From Table 1, it is appreciated that the films of Examples 1-9, wherein the fine pore volume, content, dynamic friction coefficient at 80%RH, and haze value of the inorganic fine particles contained in the coating layer are within the numerical ranges defined in claim 1 of the present invention, are superior in slip property, transparency and processing performance of the films. It is also appreciated that the films of Comparative Example 1-5, wherein the fine pore volume, content, dynamic friction coefficient at 80%RH, and haze value of the inorganic fine particles contained in the coating layer are outside the numerical ranges defined in claim 1 of the present invention, are defective in any of the slip property, transparency and processing performance of the films.

### Industrial Applicability

Since the polyamide resin laminate film of the present invention has superior properties as mentioned above, it can be preferably used as a packaging film.

## Claims

1. A polyamide resin laminate film produced by a co-extrusion method, comprising a substrate layer and a coating layer laminated on at least one surface of the substrate layer, which shows a dynamical friction coefficient of the coating layer of not more than 0.7 as measured according to ASTM-D1894 under an atmosphere of 80%RH, and a haze value of not more than 5.0.

2. The polyamide resin laminate film of claim 1, wherein the coating layer comprises inorganic fine particles having a fine pore volume of 0.3-1.0 ml/g in a proportion of 0.2-1.00 wt%.

3. The polyamide resin laminate film of claim 1 or 2, wherein the proportion of the thickness of the coating layer to the thickness of the whole substrate layer is 0.01-0.4.

4. The polyamide resin laminate film of any one of claims 1 to 3, wherein the inorganic particles are silica particles.

5. The polyamide resin laminate film of any one of claims 1 to 4, which comprises ethylene bis(stearic acid amide) in a proportion of 0.05-0.30 wt%.

6. The polyamide resin laminate film of any one of claims 1 to 5, wherein the coating layer comprises second inorganic fine particles having a fine pore volume of 1.3-1.8 ml/g in a proportion of 0.3-0.5 wt%.
